# EUROPÄISCHE PATENTSCHRIFT

(11) **EP 2 920 054 B1**
(45) Veröffentlichungstag und Bekanntmachung des Hinweises auf die Patenterteilung: **01.01.2020**
(21) Anmeldenummer: 13796000.1
(22) Anmeldetag: 11.11.2013
(51) Int. Cl.: B63B 43/00, B63H 20/00, B63H 21/17, H02H 5/08

(54) **ELEKTRISCHER SPEICHER MIT WASSERSENSOR**
ELECTRICAL STORAGE WITH WATER SENSOR
ACCUMULATEUR ÉLECTRIQUE AVEC CAPTEUR D'EAU

(30) Priorität: 12.11.2012 DE 102012021994; 03.02.2013 EP 13000547
(43) Veröffentlichungstag der Anmeldung: 23.09.2015
(73) Patentinhaber: Torqeedo GmbH, 82205 Gilching (DE)
(72) Erfinder: HARTMEYER, Marc, 81829 München (DE); KRIEGER, Philipp, 82340 Feldafing (DE); BIEBACH, Jens, 82327 Tutzing (DE)
(74) Vertreter: Nordmeyer, Philipp Werner
(86) Internationale Anmeldenummer: PCT/EP2013/003392
(87) Internationale Veröffentlichungsnummer: WO 2014/072071

(56) Entgegenhaltungen:
- EP-A1- 1 806 280
- WO-A1-2010/127911
- US-A- 5 292 269
- US-A- 5 516 312
- US-A1- 2011 135 984
- US-A1- 2011 244 739
- US-B1- 6 669 516

## Beschreibung

Die Erfindung betrifft ein Boot mit elektrischem Speicher, der mindestens ein Speicherelement und einen positiven und einen negativen Pol aufweist, wobei die Pole in stromleitender Verbindung mit dem Speicherelement stehen. Ferner bezieht sich die Erfindung auf ein Verfahren zur Sicherheitsabschaltung eines auf einem Boot solchen elektrischen Speichers sowie auf ein Boot mit einem solchen Speicher.

Werden elektrische Kontakte, zwischen denen eine Gleichspannung anliegt, in Kontakt mit Wasser gebracht, kommt es zur Elektrolyse. Dabei tritt galvanische Kontaktkorrosion auf und es bildet sich Knallgas. Knallgas ist hochexplosiv und birgt entsprechendes Gefahrenpotenzial. Bei Spannungen, die höher als extraniedrige Spannung, d.h. höher als 60V sind, besteht für Personen außerdem die Gefahr von Stromunfällen.

Elektro-Außenbordmotoren für Boote werden daher bisher mit einem Gehäuse nach Schutzart IP67 ausgerüstet. Diese Gehäuse schützen den Elektro-Außenbordmotor gegen das Eindringen von Wasser beim kurzzeitigen Untertauchen. Die Prüfnorm schreibt hierfür in 1 m Tiefe eine Wasserdichtigkeit über 30 Minuten vor.

Der Schutzgrad IP67 garantiert die Wasserdichtigkeit bei einer Tauchtiefe von einem Meter nur für eine halbe Stunde. Bei einem Bootsunfall kann aber der Außenbordmotor auch in größere Tiefen absinken und/oder innerhalb einer halben Stunde nicht aus dem Wasser geborgen werden. Außerdem kann es im Havariefall zur Beschädigung der Isolierung des Gehäuses kommen, so dass anschließend doch wieder die Gefahr von Knallgasbildung und elektrischem Schlag besteht.

Die US 6 669 516 B1 zeigt ein Boot mit elektrischem Speicher, die US 2011/135984 A1 zeigt eine Sicherheitsvorrichtung für elektrische und hybridelektrische Energiespeichersysteme, und die WO 2010/127911 A1 zeigt eine Kurzschlusssicherung für eine Elektrofahrzeugbatterie.

Aufgabe vorliegender Erfindung ist es daher, ein Verfahren und eine Vorrichtung bereit zu stellen, mit dem diese Gefahren vermieden werden.

Diese Aufgabe wird durch einen elektrischen Speicher gelöst, der mindestens ein Speicherelement und einen positiven und einen negativen Pol aufweist, wobei die Pole in stromleitender Verbindung mit dem Speicherelement stehen, welcher dadurch gekennzeichnet ist, dass ein Wassersensor vorgesehen ist, welcher feststellt, ob sich einer der Pole in Kontakt mit Wasser befindet, und wobei der Wassersensor in Wirkverbindung mit einer Abschalteinrichtung steht, welche zur Unterbrechung der stromleitenden Verbindung zwischen mindestens einem der Pole und dem Speicherelement dient.

Die Verwendung der Schutzklasse IP67 stellt zwar einen wichtigen Basisschutz dar. Auf Grund der zeitlichen Begrenzung und der Begrenzung, die sich aus der maximalen Tiefe ergibt, verbleiben jedoch Risiken, die durch die erfindungsgemäße Installation reduziert oder ausgeschlossen werden.

Ein wichtiges Anwendungsgebiet der Erfindung sind elektrische Speicher auf Booten, insbesondere auf Booten mit Elektroantrieb.

Die Erfindung schlägt vor, im Unglücksfall, wenn einer der Pole des elektrischen Speichers mit Wasser in Kontakt kommt, den oder die Pole spannungsfrei zu schalten, um zumindest weitere Folgeschäden zu minimieren und insbesondere die oben beschriebene Kontaktkorrosion zu vermeiden. Es wird daher ein Wassersensor vorgesehen, der den Kontakt eines der Pole mit Wasser detektiert. Wenn sich einer der Pole im Wasser oder unter Wasser befindet oder wenn eine bestimmte Feuchtigkeitsschwelle überschritten ist, wird der betreffende Pol oder werden beide Pole spannungsfrei geschaltet. Der Wassersensor steht dazu mit einer Abschalteinrichtung in Wirkverbindung, welche in diesem Fall die stromleitende Verbindung zwischen mindestens einem der Pole und dem elektrischen Speicher trennt.

Der elektrische Speicher ist insbesondere eine Batterie oder ein Akkumulator. Besonderen Sicherheitsgewinn bringt die Erfindung bei elektrischen Speichern, insbesondere Batterien oder Akkumulatoren, die eine Spannung von mehr als 60 V, mehr als 100 V oder mehr als 200 V zur Verfügung stellen. So wird die erfindungsgemäße Sicherheitsschaltung beispielsweise mit Vorteil auf Booten eingesetzt, die eine Spannungsversorgung von 300 V oder 400 V aufweisen.

Der Wassersensor registriert, wenn Wasser an der zu überwachenden Stelle auftritt. In dem Wassersensor kann beispielsweise ein optisches Messprinzip zum Einsatz kommen, bei dem die Anwesenheit von Wasser mittels einer Lichtquelle und einem Lichtempfänger festgestellt wird. Je nach Ausführungsform des Wassersensors wird Wasser an der Messstelle den Lichtstrom zwischen Lichtquelle und Lichtempfänger unterbrechen oder über Streuung erst ermöglichen. Eine Änderung des Lichtstroms zeigt damit die Anwesenheit von Wasser an der Messstelle an.

Alternativ beruht der Wassersensor auf einem elektrischen Messprinzip. Der Wassersensor besitzt hierbei einen ersten und einen zweiten Messkontakt sowie eine Messschaltung zur Bestimmung einer zwischen dem ersten und dem zweiten Messkontakt vorliegenden elektrischen Messgröße. Wenn der ursprünglich beispielsweise mit Luft gefüllte Zwischenraum zwischen den beiden Messkontakten mit Wasser gefüllt wird, so ändern sich der Widerstand bzw. die Leitfähigkeit zwischen den Messkontakten. Diese Änderung wird vom Wassersensor als Anwesenheit von Wasser interpretiert.

In einer weiteren Ausführungsform dient einer der Pole des elektrischen Speichers als eine der Messkontakte. Entweder der positive Pol oder der negative Pol des elektrischen Speichers werden als erster Messkontakt eingesetzt. Die Wasserdetektion erfolgt durch Messung einer elektrischen Größe, beispielsweise des elektrischen Widerstandes, zwischen einem der Pole und dem zweiten Messkontakt. Diese Vorgehensweise hat den Vorteil, dass die Wasserdetektion in unmittelbarer Nähe des einen Pols des elektrischen Speichers erfolgt.

In einer anderen Ausführungsform der Erfindung ist die Messschaltung über einen Vorwiderstand mit dem positiven und/oder dem negativen Pol verbunden, so dass der Strom aus der Messschaltung bzw. in die Messschaltung strombegrenzt ist und selbst im Falle eines harten Kurzschlusses zwischen einem Pol der Messschaltung und dem Pol der Batterie, der nicht Bestandteil der Messschaltung ist, einen kritischen Wert nicht übersteigt. Die Messschaltung ist normaler Weise darauf ausgelegt, die Impedanz zwischen einem Messkontakt und einem zweiten Messkontakt, der auch ein Batteriepol sein kann, zu ermitteln. Für den Fall, dass ein Batteriekontakt selbst Referenzkontakt ist, muss sichergestellt werden, dass es im Falle einer leitenden Verbindung zwischen dem nicht referenzierten Kontakt und dem Kontakt der Messschaltung nicht zu einer Beschädigung der Messschaltung kommt.

Bei einer weiteren Ausführungsform gibt es je eine Messschaltung zwischen einem Messkontakt und jeweils einem der Batteriekontakte, was insbesondere bei Batterien mit großer räumlicher Ausdehnung sinnvoll ist. Batterien werden im Allgemeinen waagerecht eingebaut, so dass alle Batteriepole eine gleiche Höhe über dem Wasserspiegel aufweisen. Bei einer Havarie könnte es zur Schräglage kommen, bei der dann einer der Batteriepole zeitlich signifikant eher Kontakt mit dem eindringenden Wasser hat und dann die Abschaltung des Speichers deutlich vor dem Wasserkontakt des zweiten Speicherpoles stattfindet.

Bei einer weiteren Ausführungsform werden ausschließlich beide Speicherpole als Messkontakte verwendet. Diese Methode setzt voraus, dass die im fehlerfreien Zustand an den Speicherpolen wirksame Impedanz bekannt ist, was insbesondere bei Systemen mit unterschiedlichem Ausbaugrad schwierig ist. Kommt es dann zu einer signifikanten Impedanzänderung, werden die Batteriepole abgeschaltet.

Eine weitere Ausführungsform besteht in der Verwendung von Messkontakten, die in keiner Verbindung mit den Kontakten des elektrischen Speichers stehen. Diese Kontakte lassen sich dann so im Boot anordnen, dass Sie den Wasserkontakt feststellen, bevor die Pole des elektrischen Speichers mit dem Wasser in Verbindung kommen. Die Auswerteschaltung kann sich innerhalb oder außerhalb des Speichers befinden.

Die Erfindung kommt bevorzugt bei auf Booten befindlichen elektrischen Speichern, ganz besonders bei elektrischen Außenbordmotoren zum Einsatz. Insbesondere bei Außenbordantrieben, bei denen sich der elektrische Speicher oder die Batterie im Außenbordantrieb befinden, bringt die Erfindung einen wesentlichen Sicherheitsgewinn.

Das erfindungsgemäße Verfahren zur Sicherheitsabschaltung eines elektrischen Speichers, der einen positiven und einen negativen Pol aufweist, ist dadurch gekennzeichnet, dass detektiert wird, ob einer der Pole Kontakt mit Wasser hat, und im Falle der Detektion von Wasser die stromleitende Verbindung zwischen mindestens einem der Pole und dem elektrischen Speicher unterbrochen wird.

Die Detektion von Wasser erfolgt bevorzugt mittels eines elektrischen Messverfahrens, insbesondere durch Messung der elektrischen Leitfähigkeit oder des elektrischen Widerstandes.

Eines der Ziele der Erfindung ist es, die Kontaktkorrosion im Falle des Kontakts der Pole des elektrischen Speichers mit Wasser zu verhindern. Von Vorteil wird daher der elektrische Widerstand in der Umgebung mindestens einer der Pole bestimmt. Der Begriff in der Umgebung soll insbesondere bedeuten, dass die Messung in einem Abstand von weniger als 30 cm, weniger als 20 cm oder weniger als 10 cm von dem Pol vorgenommen wird. Beide Messkontakte werden in einem Abstand von weniger als 30 cm, weniger als 20 cm oder weniger als 10 cm von dem Pol vorgesehen. Besonders bevorzugt wird einer der Pole selbst als Messkontakt verwendet und der Widerstand zwischen dem Pol und dem zweiten Messkontakt wird detektiert.

Die Messkontakte werden räumlich bevorzugt so angeordnet, dass es bei der Montage des Speichers oder anderer Bootskomponenten nicht zu einem ungewollten Kontakt durch das verwendete Werkzeug kommen kann. Einem ungewollten Kontakt kann bei elektrischen Speichern unter anderem dadurch vorgebeugt werden, dass sich zwischen den Polen des Speichers eine mechanische Barriere befindet, die eine Berührung auf kurzer Distanz in direkter Luftlinie ausschließt. In einem solche Falle ist es sinnvoll, dass sich der Messkontakt auf der Seite der Barriere befindet, auf der auch der Speicherpol angeordnet ist, der keine Verbindung zur Messschaltung hat.

Der detektierte Widerstandswert wird beispielsweise mit einem Referenzwert verglichen. Wenn die Abweichung zwischen gemessenem Widerstandswert und dem Referenzwert eine bestimmte Schwelle übersteigt oder wenn der absolute Wert des gemessenen Widerstands eine bestimmte Schwelle über- oder unterschreitet, wird dies als Anwesenheit von Wasser interpretiert und einer der Pole oder beide Pole des elektrischen Speichers werden abgeschaltet.

Vorzugsweise erfolgt die Detektion von Wasser mittels eines Wechselspannungsmessverfahrens, um galvanische Kontaktkorrosion zu minimieren. Bei Verwendung einer Wechselspannungsquelle kann bevorzugt ein Kondensator als strombegrenzende Impedanz Verwendung finden, so dass ein zu hoher Gleichstrom gegen den Gegenpol des Speichers, der nicht Bestandteil der Sensorschaltung ist, unmöglich ist.

Die Anwesenheit von Wasser an einem oder beiden Polen des elektrischen Speichers kann nicht nur die beschriebene galvanische Kontaktkorrosion hervorrufen, sondern auch Schäden an anderen mit dem elektrischen Speicher leitend verbundenen Komponenten bewirken. Von Vorteil werden daher bei Detektion von Wasser weitere elektrische Verbraucher von dem elektrischen Speicher getrennt. Insbesondere hat es sich als günstig erwiesen, in einem solchen Fall auch den Elektromotor schnell von dem elektrischen Speicher zu trennen, um Schäden am Elektromotor zu verhindern.

In einer anderen Ausführungsform ist eine Überwachungsleitung vorgesehen, über die alle an den elektrischen Speicher angeschlossenen Komponenten, insbesondere der Elektromotor, abgeschaltet werden können. Die Überwachungsleitung dient zur Sicherheitsabschaltung, wenn einer der Pole mit Wasser in Kontakt kommt.

Von Vorteil ist der elektrische Speicher zusätzlich zu der erfindungsgemäßen Wassererkennung mit weiteren Sicherheitseinrichtungen versehen. Die weiteren Sicherheitseinrichtungen umfassen vorzugsweise Mittel zur Erkennung und zum Schutz gegen Kurzschlüsse, Überladen oder Tiefentladung des elektrischen Speichers, und/oder Überhitzung der Batteriezellen und/oder der Elektronik. Mit besonderem Vorteil sind einige oder alle Sicherheitseinrichtungen, z.B. der Wassersensor oder die oben genannten weiteren Sicherheitseinrichtungen redundant ausgelegt. Das heißt, einige oder alle sicherheitsrelevanten Funktionen sind doppelt vorhanden. Auf diese Weise wird gewährleistet, dass nicht der Ausfall einer Sicherheitseinrichtung selbst zu einem potentiellen Sicherheitsproblem wird.

In einer weiteren vorteilhaften Ausführung der Erfindung ist der elektrische Speicher, insbesondere eine Batterie, mit einer pyrotechnischen Sicherung ausgerüstet, welche im Falle eines Unfalls den Elektromotor und/oder andere an den elektrischen Speicher angeschlossene elektrische Komponenten von dem elektrischen Speicher zuverlässig trennt. Die pyrotechnische Sicherung weist beispielsweise eine pyrotechnische, entzündbare oder explosive Substanz auf. Übersteigt der über die pyrotechnische Sicherung fließende Strom eine bestimmten Grenzwert, so erwärmt sich ein ohmscher Widerstand in der Sicherung so stark, dass die pyrotechnische Substanz gezündet und die stromleitende Verbindung unterbrochen wird.

Die Erfindung sowie weitere vorteilhafte Einzelheiten der Erfindung werden im Folgenden anhand der schematischen Zeichnung beispielhaft erläutert. Hierbei zeigt
- Figur 1: eine erfindungsgemäße Batterie mit Wassersensor,
- Figur 2: eine alternative Ausführungsform der Erfindung,
- Figur 3: eine Variante der Erfindung mit zwei Wassersensoren,
- Figur 4: eine erfindungsgemäße Batterie mit mechanischem Schutz zur Vermeidung ungewollter Kurzschlüsse und
- Figur 5: eine weitere Variante der Erfindung.

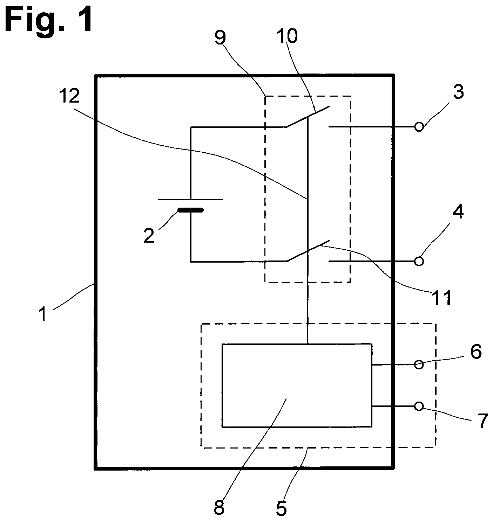

Figur 1 zeigt das Gehäuse 1 eines elektrischen Speichers, insbesondere einer Batterie oder eines Akkumulators, der eine Vielzahl von Speicherelementen, insbesondere galvanischen Zellen, besitzt. Die Zellen 2 sind an einen positiven Pol (Pluspol) 3 und an einen negativen Pol (Minuspol) 4 angeschlossen. In der Verbindung zwischen den Zellen 2 und den Polen 3, 4 befindet sich eine Abschalteinrichtung 9 mit zwei Schaltern 10, 11, welche in der Leitung zwischen den Zellen 2 und dem Pluspol 3 sowie in der Leitung zwischen den Zellen 2 und dem Minuspol 4 angeordnet sind. Durch Öffnen der Schalter 10, 11 kann die stromleitende Verbindung zwischen den Zellen 2 und den Polen 3, 4 unterbrochen werden und die Pole 3, 4 können spannungsfrei geschaltet werden.

Der elektrische Speicher wird bevorzugt als Spannungsquelle für einen Elektroantrieb auf einem Boot, insbesondere für Außenbordmotoren, eingesetzt.

In dem Gehäuse 1 ist ein Wassersensor 5 vorgesehen. Der Wassersensor 5 umfasst eine Messschaltung 8 sowie zwei Messkontakte 6, 7, welche außerhalb des Gehäuses 1 oder an dessen Äußerem angeordnet sind. Die Messschaltung 8 ist über eine Steuerleitung 12 mit den Schaltern 10, 11 verbunden.

Die Messschaltung 8 bestimmt den elektrischen Widerstand zwischen den beiden Messkontakten 6, 7. Wenn die Messkontakte 6, 7 mit Wasser in Kontakt kommen, so ändert sich der elektrische Widerstand zwischen den Messkontakten 6, 7. Diese Änderung wird von der Messschaltung 8 als Anwesenheit von Wasser interpretiert und die Schalter 10, 11 werden über die Steuerleitung 12 angesteuert und geöffnet. Die Pole 3, 4 des elektrischen Speichers werden dadurch spannungsfrei geschaltet, um Kontaktkorrosion zu vermeiden und weitere Folgeschäden zu minimieren.

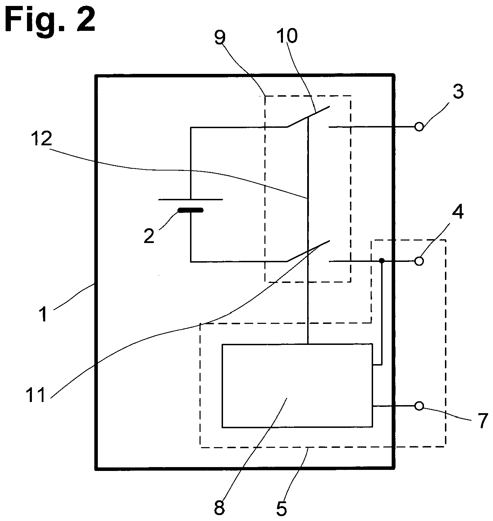

Figur 2 zeigt eine alternative Ausführungsform der Erfindung. Diese unterscheidet sich von der in Figur 1 gezeigten Version darin, dass der Minuspol 4 als Messkontakt dient. Im Übrigen sind in allen Figuren gleiche Bauteile mit den gleichen Bezugsziffern gekennzeichnet.

Die Wasserdetektion erfolgt in diesem Fall durch Messung einer elektrischen Größe, beispielsweise des elektrischen Widerstandes, zwischen dem Minuspol 4 und dem zweiten Messkontakt 7. Diese Vorgehensweise hat den Vorteil, dass die Wasserdetektion in unmittelbarer Nähe des einen Pols 4 des elektrischen Speichers erfolgt.

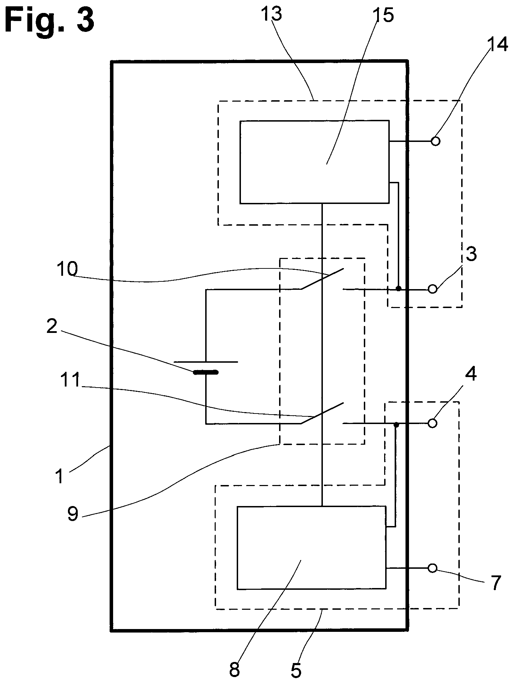

In Figur 3 ist eine weitere Ausführungsform dargestellt, bei der zwei Wassersensoren 5, 13 vorgesehen sind. Der Wassersensor 5 ist, wie anhand Figur 2 beschrieben, an den Minuspol 4 des elektrischen Speichers angeschlossen. Der Minuspol 4 wird als einer der beiden Messkontakte des Wassersensors 5 verwendet. In entsprechender Weise ist der zweite Wassersensor 13 ausgeführt, wobei der Pluspol 3 des elektrischen Speichers als einer der Messkontakte 3, 14 dient.

Die Messschaltung 8 registriert die Anwesenheit von Wasser im Bereich des Minuspols 4, die Messschaltung 13 registriert die Anwesenheit von Wasser im Bereich des Pluspols 3. Dies hat bei Batterien mit großer räumlicher Ausdehnung Vorteile. Batterien werden im Allgemeinen waagerecht eingebaut, so dass alle Batteriepole 3, 4 eine gleiche Höhe über dem Wasserspiegel aufweisen. Bei einer Havarie könnte es zur Schräglage kommen, bei der dann einer der Batteriepole 3, 4 zeitlich signifikant eher Kontakt mit dem eindringenden Wasser hat. Die in Figur 3 gezeigte Variante der Erfindung erlaubt dann eine frühzeitige Abschaltung des Speichers, deutlich bevor der zweite Speicherpol 3, 4 mit dem Wasser in Kontakt kommt.

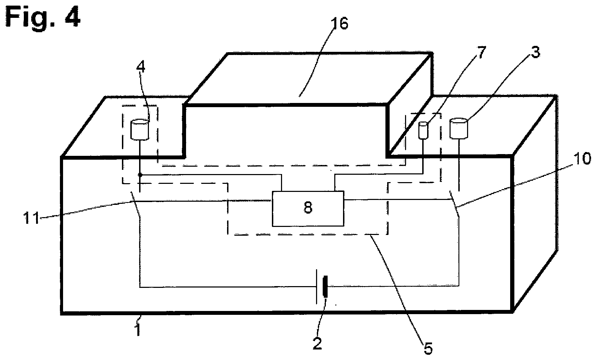

In Figur 4 ist ein elektrischer Speicher gemäß der Erfindung dargestellt, bei dem eine mechanische Barriere 16 vorgesehen ist, um bei der Montage des Speichers oder anderer Bootskomponenten durch das verwendete Werkzeug keinen ungewollten Kontakt zwischen den Batteriepolen 3, 4 und dem Messkontakt 7 herzustellen.

Die in Figur 4 gezeigte elektrische Schaltung entspricht der Schaltung gemäß Figur 2. Zwischen den Polen 3, 4 des elektrischen Speichers ist eine mechanische Barriere 16, beispielsweise in Form einer Erhöhung des Gehäuses, vorgesehen. Die Barriere 16 ist so ausgeführt, dass sie sich in der geradlinigen Verbindung in Luftlinie zwischen den beiden Polen 3, 4 befindet. Auf diese Weise wird die ungewollte Herstellung einer elektrisch leitenden Verbindung zwischen den beiden Polen 3, 4, zum Beispiel mittels eines Werkzeugs, verhindert oder zumindest erschwert.

Wenn der Wassersensor 5, wie dargestellt, so ausgeführt ist, dass einer der Pole 4 als Messkontakt dient, so ist es sinnvoll, den Messkontakt auf der Seite der Barriere 16 vorzusehen, auf der der Pol 3 des Speichers angeordnet ist, der keine Verbindung zur Messschaltung hat.

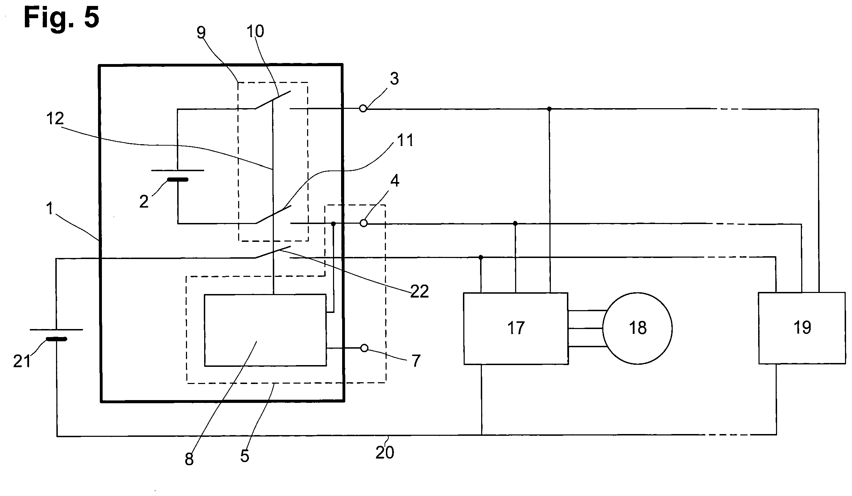

Schließlich ist in Figur 5 eine Ausführungsform der Erfindung dargestellt, bei der im Falle eines Unfalls, bei dem der Wassersensor 5 den Kontakt mit Wasser detektiert, nicht nur die Pole 3, 4, sondern auch weitere elektrische Komponenten 17, 18, 19 abgeschaltet werden.

Die gezeigte Schaltung des Wassersensors 5 entspricht der in Figur 2 gezeigten Schaltung. Selbstverständlich ist das im Folgenden erläuterte Konzept auch bei den Schaltungen gemäß den Figuren 1 oder 3 in entsprechender Weise anwendbar.

Hierzu ist zusätzlich eine Überwachungsleitung 20 vorgesehen, welche an eine Niedervolt-Spannungsquelle 21 angeschlossen ist. In dem in Figur 5 gezeigten Beispiel sind eine Motorsteuerung 17, welche einen Elektromotor 18 ansteuert, und eine weitere Komponente 19 an die Batteriepole 3, 4 angeschlossen. Die Überwachungsleitung 12 ist ebenfalls mit der Motorsteuerung 17 und der weiteren Komponente 19 verbunden. Außerdem ist in der Überwachungsleitung 20 ein Schalter 22 vorgesehen, über den die Überwachungsleitung 20 getrennt werden kann.

Im Falle eines von dem Wassersensor 5 festgestellten Problems oder Unfalls öffnet die Messschaltung 8 nicht nur die Schalter 10, 11, um die Batteriepole 3, 4 spannungsfrei zu schalten, sondern es wird auch die Überwachungsleitung 20 durch Öffnen des Schalters 22 unterbrochen. Der Motorsteuerung 17 sowie der weiteren Komponente 19 wird dadurch ein Problem signalisiert. Die Motorsteuerung 17 wird den Elektromotor 18 abschalten und die weitere Komponente 19 wird ebenso ausgeschaltet. Auf diese Weise wird nicht nur galvanische Kontaktkorrosion an den Polen 3, 4 verhindert, sondern auch einer Schädigung an den anderen mit den Zellen 2 leitend verbundenen Komponenten 17, 18, 19 entgegengewirkt.

## Patentansprüche

1. Boot mit einem elektrischen Speicher, der mindestens ein Speicherelement (2) und einen positiven und einen negativen Pol (3, 4) aufweist, wobei die Pole (3, 4) in stromleitender Verbindung mit dem Speicherelement (2) stehen, wobei ein Wassersensor (5, 13) vorgesehen ist, welcher feststellt, ob sich einer der Pole (3, 4) in Kontakt mit Wasser befindet, und wobei der Wassersensor (5, 13) in Wirkverbindung mit einer Abschalteinrichtung (9) steht, welche zur Unterbrechung der stromleitenden Verbindung zwischen mindestens einem der Pole (3, 4) und dem Speicherelement (2) dient,
**dadurch gekennzeichnet, dass**
der Wassersensor (5, 13) einen ersten und einen zweiten Messkontakt (6, 7) sowie eine Messschaltung (8) zur Bestimmung einer zwischen dem ersten und dem zweiten Messkontakt (6, 7) vorliegenden elektrischen Messgröße aufweist, wobei der positive und/oder der negative Pol (3, 4) des elektrischen Speichers als erster und/oder zweiter Messkontakt dienen,
**oder dass**
in dem Wassersensor ein optisches Messprinzip zum Einsatz kommt, bei dem die Anwesenheit von Wasser mittels einer Lichtquelle und einem Lichtempfänger festgestellt wird.

2. Boot nach Anspruch 1, **dadurch gekennzeichnet, dass** die Messchaltung (8) über einen Vorwiderstand mit dem positiven und dem negativen Pol (3, 4) verbunden ist.

3. Boot nach einem der vorhergehenden Ansprüche, **dadurch gekennzeichnet, dass** zwischen den Polen (3, 4) des elektrischen Speichers eine Spannung von mehr als 60 V, mehr als 100 V oder mehr als 200 V anliegt.

4. Boot nach einem der vorhergehenden Ansprüche, **dadurch gekennzeichnet, dass** der elektrische Speicher als Spannungsquelle, insbesondere als Batterie oder Akkumulator, ausgeführt ist.

5. Boot nach einem der vorhergehenden Ansprüche, **dadurch gekennzeichnet, dass** der positive und der negative Pol (3, 4) als Messkontakte dienen.

6. Boot nach einem der vorstehenden Ansprüche, **dadurch gekennzeichnet, dass** das Boot einen Elektromotor aufweist.

7. Verfahren zur Sicherheitsabschaltung eines elektrischen Speichers auf einem Boot, der mindestens ein Speicherelement (2) und einen positiven und einen negativen Pol (3, 4) aufweist, wobei detektiert wird, ob einer der Pole (3, 4) Kontakt mit Wasser hat, und im Falle der Detektion von Wasser die stromleitende Verbindung zwischen mindestens einem der Pole (3, 4) und dem Speicherelement (2) unterbrochen wird,
**dadurch gekennzeichnet, dass**
die Detektion von Wasser mittels eines elektrischen Messverfahrens erfolgt, wobei der positive und/oder der negative Pol (3, 4) des elektrischen Speichers als erster und/oder zweiter Messkontakt dienen,
**oder dass**
in dem Wassersensor ein optisches Messprinzip verwendet wird, bei dem die Anwesenheit von Wasser mittels einer Lichtquelle und einem Lichtempfänger festgestellt wird.

8. Verfahren nach Anspruch 7, **dadurch gekennzeichnet, dass** der elektrische Widerstand in der Umgebung mindestens einer der Pole (3, 4) bestimmt wird, insbesondere in einem Abstand von weniger als 30 cm, weniger als 20 cm oder weniger als 10 cm von dem Pol bestimmt wird.

9. Verfahren nach Anspruch 7 oder 8, **dadurch gekennzeichnet, dass** die Detektion von Wasser mittels eines Wechselspannungsmessverfahrens erfolgt.

10. Verfahren nach einem der Ansprüche 7 bis 9, **dadurch gekennzeichnet, dass** bei Detektion von Wasser weitere elektrische Verbraucher (17, 18, 19) von dem elektrischen Speicher getrennt werden.

## Claims

1. Boot having an electrical storage which has at least one storage element (2) and a positive and a negative terminal (3, 4), wherein the terminals (3, 4) are in conductive connection with the storage element (2), wherein a water sensor (5, 13) is provided which detects whether one of the terminals (3, 4) is in contact with water, and wherein the water sensor (5, 13) is in operative connection with a shut-down device (9) which serves to interrupt the conductive connection between at least one of the terminals (3, 4) and the storage element (2),
**characterised in that**
the water sensor (5, 13) has a first and a second measuring contact (6, 7) and a measuring circuit (8) for determining an electrical measuring variable present between the first and the second measuring contact (6, 7), wherein the positive and/or the negative terminal (3, 4) of the electrical storage serve as first and/or second measuring contact,
**or that**
in the water sensor is used an optical measuring principle in which the presence of water is determined by means of a light source and a light receiver.

2. Boat according to claim 1, **characterised in that** the measuring switch (8) is connected with the positive and the negative terminal (3, 4) via a series resistor.

3. Boat according to any of the preceding claims, **characterised in that** between the terminals (3, 4) of the electrical storage is applied a voltage of more than 60 V, more than 100 V or more than 200 V.

4. Boat according to any of the preceding claims, **characterised in that** the electrical storage is in the form of a voltage source, in particular a battery or accumulator.

5. Boat according to any of the preceding claims, **characterised in that** the positive and the negative terminal (3, 4) serve as measuring contacts.

6. Boat according to any of the preceding claims, **characterised in that** the boat has an electric motor.

7. Method for the safety switch-down of an electrical storage on a boat, which has at least one storage element (2) and a positive and a negative terminal (3, 4), wherein it is detected whether one of the terminals (3, 4) has contact with water, and in the case of the detection of water the conductive connection between at least one of the terminals (3, 4) and the storage element (2) is interrupted,
**characterised in that**
the detection of water takes place by means of an electrical measuring method, wherein the positive and/or the negative terminal (3, 4) of the electrical storage serve as first and/or second measuring contact,
**or that**
in the water sensor is used an optical measuring principle in which the presence of water is determined by means of a light source and a light receiver.

8. Method according to claim 7, **characterised in that** the electrical resistance is determined in the environment of at least one of the terminals (3, 4), in particular is determined at a distance of less than 30 cm, less than 20 cm or less than 10 cm from the terminal.

9. Method according to claim 7 or 8, **characterised in that** the detection of water is carried out by means of an alternating voltage measuring method.

10. Method according to any of claims 7 to 9, **characterised in that** when water is detected further electrical loads (17, 18, 19) are switched off from the electrical storage.

## Revendications

1. Bateau avec accumulateur électrique, qui présente au moins un élément d'accumulation (2) et un pôle positif et un pôle négatif (3, 4), dans lequel les pôles (3, 4) sont en liaison électroconductrice avec l'élément d'accumulation (2), dans lequel un capteur d'eau (5, 13) est prévu, lequel constate si un des pôles (3, 4) est en contact avec de l'eau, et dans lequel le capteur d'eau (5, 13) est en liaison active avec un dispositif de mise hors circuit (9), lequel sert à l'interruption de la liaison électroconductrice entre au moins un des pôles (3, 4) et l'élément d'accumulation (2),
**caractérisé en ce que**
le capteur d'eau (5, 13) présente un premier et un deuxième contact de mesure (6, 7) ainsi qu'un circuit de mesure (8) pour la détermination d'une grandeur de mesure électrique présente entre le premier et le deuxième contact de mesure (6, 7), dans lequel le pôle positif et/ou le pôle négatif (3, 4) de l'accumulateur électrique servent de premier et/ou deuxième contact de mesure,
**ou que**
un principe de mesure optique est utilisé dans le capteur d'eau, dans lequel la présence d'eau est constatée au moyen d'une source de lumière et d'un récepteur de lumière.

2. Bateau selon la revendication 1, **caractérisé en ce que** le circuit de mesure (8) est relié au pôle positif et au pôle négatif (3, 4) par le biais d'une résistance série.

3. Bateau selon l'une quelconque des revendications précédentes, **caractérisé en ce qu'**il y a une tension de plus de 60 V, de plus de 100 V ou de plus de 200 V entre les pôles (3, 4) de l'accumulateur électrique.

4. Bateau selon l'une quelconque des revendications précédentes, **caractérisé en ce que** l'accumulateur électrique est réalisé en tant que source de tension, en particulier en tant que batterie ou accumulateur.

5. Bateau selon l'une quelconque des revendications précédentes, **caractérisé en ce que** le pôle positif et le pôle négatif (3, 4) servent de contacts de mesure.

6. Bateau selon l'une quelconque des revendications précédentes, **caractérisé en ce que** le bateau présente un moteur électrique.

7. Procédé de mise hors circuit de sécurité d'un accumulateur électrique sur un bateau, qui présente au moins un élément d'accumulation (2) et un pôle positif et un pôle négatif (3, 4), dans lequel il est détecté si un des pôles (3, 4) est en contact avec de l'eau, et dans le cas de la détection d'eau, la liaison électroconductrice entre au moins un des pôles (3, 4) et l'élément d'accumulation (2) est interrompue
**caractérisé en ce que**
la détection d'eau a lieu au moyen d'un procédé de mesure électrique, dans lequel le pôle positif et/ou le pôle négatif (3, 4) de l'accumulateur électrique servent de premier et/ou deuxième contact de mesure,
**ou que**
un principe de mesure optique est utilisé dans le capteur d'eau, dans lequel la présence d'eau est constatée au moyen d'une source de lumière et d'un récepteur de lumière.

8. Procédé selon la revendication 7, **caractérisé en ce que** la résistance électrique est déterminée dans l'environnement d'au moins un des pôles (3, 4), en particulier à une distance de moins de 30 cm, de moins de 20 cm ou de moins de 10 cm du pôle.

9. Procédé selon la revendication 7 ou 8, **caractérisé en ce que** la détection d'eau a lieu au moyen d'un procédé de mesure de tension alternative.

10. Procédé selon l'une quelconque des revendications 7 à 9, **caractérisé en ce que** lors de la détection d'eau, d'autres consommateurs électriques (17, 18, 19) sont mis hors circuit du accumulateur électrique .
